(19) Europäisches Patentamt
European Patent Office
Office européen des brevets

(11) **EP 2 006 573 A2**

(12) **EUROPÄISCHE PATENTANMELDUNG**

(43) Veröffentlichungstag:
**24.12.2008 Patentblatt 2008/52**

(51) Int Cl.:
***F16F 15/26*** *(2006.01)*

(21) Anmeldenummer: **08466014.1**

(22) Anmeldetag: **18.06.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **21.06.2007 CZ 20070425**

(71) Anmelder: **Skoda Auto A.S.**
**293 60 Mladá Boleslav (CZ)**

(72) Erfinder: **Babak, Jan**
**29301 Mlada Boleslav (CZ)**

(54) **Ausgleichsystem einer Kolbenmaschine**

(57) Das Ausgleichssystem der Kolbenmaschine ist eine technische Lösung, welche die Konstruktionsmöglichkeiten und die Einbauvariabilität des bereits bekannten dreiwelligen multifunktionellen Ausgleichsystems weiter erweitert, wobei dieses für die vollständige Befreiung von vor allem Reihenviezylinderkolbenaggregaten mit zentralem Kurbelmechanismus von allen freien dominanten Erregerkomponenten der zweiten harmonischen Ordnung , als restliche Äußerung der dynamischen Wirkung von Schubmassen, bestimmt.

Gegenstand der Aufgabenstellung ist die axiale gestreute Anordnung von Schwerpunkten drei verschiedener Hilfsausgleichsgegengewichte, welche mit zweifacher Frequenz innerhalb des Aggregats synchronisiert gegenläufig und parallel mit der Kurbelwelle um drei gegenseitig parallel laufende Achsen rotieren und die anschließende spezifische räumliche Synthese der Wirkung derer Fliehkräfte. Zu deren Erzeugung und Vektorzusammensetzung auf der Grundlage des klassischen Lanchesterprinzips kommt es hier so nicht lediglich in einer einzigen Ausgleichsebene, so wie es bisher bei multifunktionalen Ausgleichssystemen, bestimmt zur Liquidation der Erreger höherer harmonischer Schwingungen, bekannt war, sondern zu einer Rotation laut bestimmter Grundsätze in drei verschiedenen, gegenseitig parallel laufenden Ebenen.

Obr. 2

EP 2 006 573 A2

## Beschreibung

Die Erfindung bindet an die Lösung des multifunktionalen Ausgleichssystems laut der Patentschrift CZ 297752, deren Eigenschaften und Konstruktionsvorteile vollständig beibehalten bleiben, jedoch zusätzlich deren bauliche Möglichkeiten noch um weitere Variationen erweitert werden, an.

Im vorliegenden Kontext handelt es sich um eine Vorrichtung, die aufgrund der konstruktiv praktikablen und der sparenden baulichen Art und Weise die Fähigkeit besitzt, vollständig dynamisch sämtliche störenden, wenn auch in Phasen gegeneinander verschobene Komponenten einer bestimmten kritischen harmonischen Komponente auszugleichen; in diesem konkreten Fall die Restschubkraft und das laterale Kippmoment der dominanten zweiten Ordnung.

Eine solche Eingabe erfolgt heute vor allem als Aufgabe im Automobilbau bei Fahrzeugen mit Frontantrieb im Zusammenhang mit dem Bedarf den Komfort der Fahrzeuginsassen sicherzustellen, in dem die Quellen störender Schwingungen der mobilen Reihenvierzylindermotoren höherer Hubraumumfänge beruhigt werden; es handelt sich in diesem Fall vor allem um Motoren mit hohem Hub, die Bestandteil von Dreipunkt gelagerten und quer verbauten Antriebsaggregaten sind, die über eine Schubstrebe verfügen. In diesem Fall stellt das zugehörige Ausgleichssystem, welches sich auf die pränatale Liquidation der Schwingungserreger, die aus der natürlichen, dynamischen Unausgeglichenheit des Motors hervorgehen, konzentriert, sicher, dass ein vollständiger und konstruktionsseitig zugänglicher Wirkungsausgleich der freien Kräfte seitens der Schwungvorschubgewichte des Kolbenwerks und deren Nebenprodukte bis auf das Niveau vernachlässigbarer, residualer Vibrationserregerbestandteile der vierten oder höheren Ordnung erfolgt.

Obwohl die Verwendung ähnlicher Hilfsausgleichssysteme bei Reihenmotoren bisher nur für hochwertigere Fahrzeuge der Ober- und Luxusklasse angenommen wurden, kann mit der Einführung neuer Technologien, die eine Reduzierung der $CO_2$-Emmission verfolgen, erwartet werden, dass eine weitere Exploitationsnachfrage erfolgt. Unter anderem auch deshalb, da die gegenständliche Vorrichtung zweckmäßigerweise in das vorbereitete Hauptprojekt "Intelligente Fahrzeuge betrieben mit erneuerbaren Kraftstoffen" passt. Die umweltfreundlich akzeptablen Substitutionsalkoholbiokraftstoffe haben gegenüber den bestehenden Kraftstoffen einen geringeren Brennstoffheizwert; aus diesem Grund werden die betreffenden Kraftfahrzeuge der zukünftigen Generationen, die mittels der eingeführten orthodoxen Technologiebasis gefertigt werden, für die Beibehaltung der Leistung einen umfassenderen Kraftstofftank benötigen; weiter wird ein entsprechend erhöhter Hubraum der neuen Verbrennungsmotoren benötigt. Deshalb besteht eine begründete Prognose, dass auch so angepasste Maschinen mit volumengesteigerter Zylindersektion weitere Anwärter für eine Anwendung der ergänzenden Ausgleichstechnik sein werden.

Sehr gut vorstellbar sind jedoch auch bisher nicht aufgeführte mögliche Anwendungen der Erfindung in technologisch verwandten Fachgebieten, außerhalb des Fahrzeugbaus, beispielsweise bei Schiffsmotoren, Kompressoren und vor allem bei den stationären, erfolgversprechenden Maschinenaggregaten der Kolbenmotorkompressoreneinheiten von Wärmepumpen, wie im weitern ausgeführt wird.

### Bisheriger Stand der Technik

Der Gedanke hinsichtlich eines Ausgleichs von hochtourigen Motoren mit periodischer jedoch ungleichmäßiger Bewegung der Vorschubmassen von Kolbengruppen der Kurbelmechanismen, vor allem bei Verbrennungsmotoren, ist ebenso alt, wie die eigentliche Einführung dieser Technik in die Kundennutzung vor mehr als 100 Jahren.

Die bisher bekannten, angewendeten Entwicklungskonzepte konkreter, wirksamer, technischer Lösungen im Bereich der präventiven Quellenbeseitigung dynamischer Schwingungen in diesen Maschinen umfassen grundsätzlich zwei Arten.

Der erste konstruktive Herangehensweise an diese Aufgabenstellung ist der sog. "gespiegelte Aufbau der Kurbeln und Kolben", welcher die gemeinsame Gegenläufigkeit der Ausgleichsmassen nutzt; diese bewegen sich in den äquivalenten Kurbelmechanismen mit einer relativen Drehung der Kröpfung auf der Welle um einen Phasenwinkel $\pi = 180°$, aufgrund dessen wird die dynamische Wirkung der Bewegungsungleichmäßigkeit beider gradlinig gegeneinander sich bewegenden Massen die Möglichkeit haben, einander natürlich aufzuheben. Dieses Prinzip wird mit Vorliebe bis heute bei den flachen Motoren vom Typ "Boxer" verwendet. Jedoch löst eine so ausgewählte Form des Aggregats den Ausgleich der quer verlaufenden Erregermomente nicht, die sich an dieser Stelle summieren und zudem einen notwendigen liegenden Einbau vorbestimmt sind, was nicht immer dem Vorhaben des Entwicklers entspricht.

Aus diesem Grund wird mit Erfolg ein anderes technisches Prinzip angewendet; es ist auch für die übliche Reihenanordnung der Zylinder der Kolbenmaschine geeignet, wobei der Wegbereiter dieses Systems Anfang des 20. Jahrhunderts Dr. F. Lanchester war. Seine Methode begründet sich auf der dynamischen Auflösung ungleichmäßiger periodischer Bewegung der Translationsmassen der Kolbengruppen auf der einzelnen elementaren, harmonischen Komponente und auf der sukzessiven Beseitigung der vorrangig dominanten Reste der Unausgewogenheit mittels einer Synthese der Gegenwirkungen von Fliehkraft von Paaren gegenseitig rotierender, zentrierter Gewichte. Eine grundlegende Rolle spielt dabei eine vorteilhafte Anordnung der Kurbeln der zentralen Welle und die geeignete Auswahl der Kolbenanzahl des Reihenmotors, um im Vorfeld die gewünschte "kannibalische" Eliminierung der störenden, partiellen, harmonischen Komponenten der aktuellen Unausgewogenheit unter den einzelnen Kurbelgruppenmechanismen in Anwendung zu bringen. Die Unterdrückung der dominanten, unausgewogenen, harmonischen Resterregergröße der Maschine, damit sind die sich ergebenden periodisch pulsierenden Translationskräfte in Richtung der Kolbenachsen und der Nebenprodukte in Form der quer verlaufenden Momente höherer Ordnungen, ggf. des restlichen, störenden längs gerichteten Moments mit ähnlichen Eigenschaften gemeint, werden dann dem Hilfsausgleichsystem übertragen.

Dieses kann aus verschiedenen Konstruktionsphilosophien hervorgehen, und es können in Anbetracht der Einbaumöglichkeit und Kompromisse verschiedene Ausführungsformen bestehen. Deshalb tauchten aus der Not geborene Entwürfe auf, welche sich zwar seitens eines Einbaus angenehm darstellten, jedoch keine exakte Zentrierung der Ausgleichswirkung dieser Systeme außerhalb des Wirkungsbereichs der eigenen, störenden Anregungskraft vorwiesen, wobei die Notwendigkeit einer weiteren Kompensation der so entstandenen unerwünschten Zusatzmomente implizieren; dieses begründet uns deren Akzeptanz.

Eine solche unexakte Vorgehensweise ist beispielsweise die empirisch unterlegte Methode eines wenigstens annähernden Ausgleichs, bekennend die Dimension und Anordnung der Ausgleichsmassen auf der Grundlage deren Momentsymmetrie hinsichtlich des Gesamtaggregatschwerpunkts, welcher jedoch außerhalb der Ausgleichsebene der Reihenkolbenmaschine liegt.

Die einhundertjährige Lanchestermethode des Ausgleichs von Reihenmotoren ist zwar in der gegenwärtigen technischen Praxis am weitesten verbreitet und deren historische Genesis, Anwendungsform, Vorteile, Wirkungen und auch die negativen Aspekte wurden in den Hauptpunkten bereits näher im oben angeführten Dokument CZ 297752 beschrieben, auf das hier parallel verwiesen wird und das den letzten bekannten Stand der Technik im zugehörigen Bereich repräsentiert.

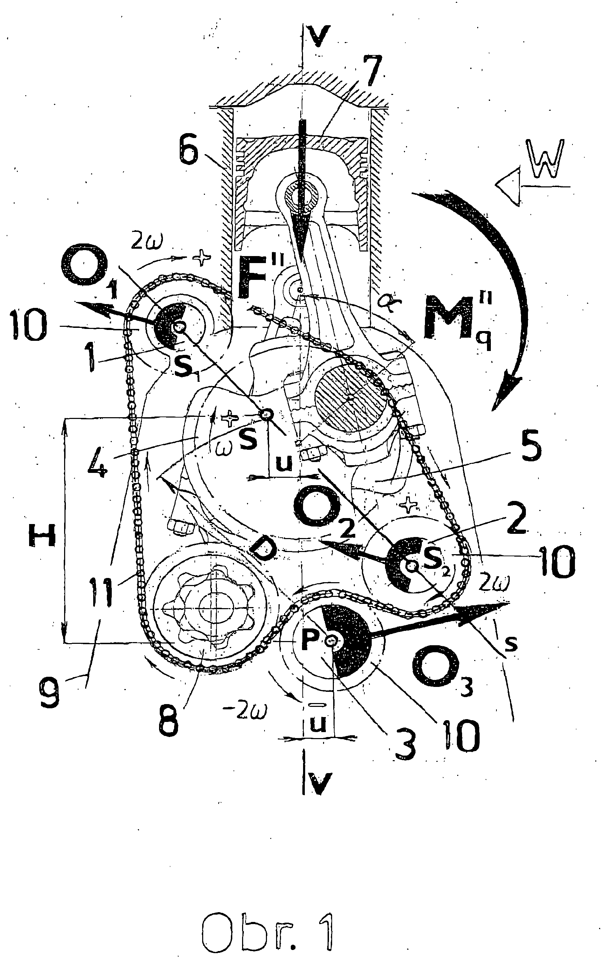

Die gegenständliche Ausführung, laut CZ 297752, mit der Garantie einer optimalen Ausgleichswirkung ist ein Multifunktionssystem, das in der Lage ist mittels einer umsetzbaren Konstruktion die absolute Beseitigung aller restlichen, dynamischen Komponenten der zweiten Ordnung bei einem Reihenvierzylindermotor sicher zu stellen. Das System ist mit gegenseitig kinematisch fest verbundenen und mit zweifacher Frequenz rotierenden, drei parallel positionierten Ausgleichswellen ausgestattet, wobei davon eine gegen die Drehrichtung der Zentralkurbelwelle rotiert. Diese angeführte Ausführung, laut CZ 297752, entsprechend der schematischen Darstellung der Fig. 1, setzt jedoch eine obligatorische Schwerpunktrotation und damit auch die Wirkung aller drei engagierten Gegengewichte lediglich in einer einzigen Ausgleichsebene des Motors voraus.

Dieses ist sicher auch möglich und bei den bisher bekannten Systemen mit paarweise angeordneten, gegenläufigen Ausgleichswellen für den dynamischen Ausgleich höherer, harmonischer Störkomponenten des Kolbenwerks nicht nur bewährt und üblich, aber aufgrund des eigentlichen Prinzips sogar notwendig. Jedoch ist diese strikte Restriktion bei der verwiesenen, dreiwelligen Ausführung des Ausgleichssystems bei einer vollständigen Beibehaltung seiner optimalen Wirkung bei weitem nicht notwendig, jedoch kann deren rigide Einhaltung auch zum Nachteil werden. In dem Fall, wenn die Schwerpunktkonzentration aller drei rotierender Gegengewichte in derselben einzigen, exponierten Motorsymmetrieebene sein würde, bestehen hier eine lokale Einbaubegrenzung und daraus notwendigerweise abgeleitet konstruktionsseitig, einschränkende Aspekte. Das Ergebnis einer so a priori einfach übernommenen, üblichen seitens Lanchester entworfenen Philosophie bei der Ausgleichung höherer harmonischer Erregerkomponenten, würde so unnötig zu einer Erhöhung des Motorenhubraums führen, als dieses unbedingt erforderlich wäre und als es das Potential des oben verwiesenen grundlegenden dreiwelligen Konzepts eines multifunktionellen Ausgleichssystems bequem ermöglichen würde.

Das Wesentliche der Erfindung

Die oben angeführte Unzulänglichkeit der zuletzt aufgeführten, bekannten Ausführung wird bis zu einem bedeutenden Maß durch den vorgelegten Konstruktionsentwurf eines Ausgleichssystems der Kolbenmaschine laut der Erfindung korrigiert. Wie bereits vorab angeführt wurde, nutzt die gegenständliche Lösung als Ausgangszustand das bereits vorhandene und bekannte Konzept einer Synthese benötigter, gleichlaufender und gegenläufiger Ausgleichskomponenten der dominanten zweiten Harmonischen unter der Zuhilfenahme synchron rotierender, dreier gleichlaufender Wellen mit den Achsen $o_1$, $o_2$, $o_3$, versehen mit den zentrierten Massen $m_1$, $m_2$ a $m_3$ mit den Massenmittelpunkten, versetzt um die Auslegung $R_1$, $R_2$ und $R_3$, welche somit die ausgleichenden Fliehkräfte $O_1$, $O_2$ und $O_3$ der Größe, bestimmt durch die hier angefügten Beziehungen generieren

$$O_1 = 4.\, m_1 R_1\, \omega^2\, e^{2j\alpha}$$

$$O_2 = 4. \ m_2R_2 \ \omega^2 \ e^{2j\alpha}$$

$$O_3 = 4. \ m_3R_3 \ \omega^2 \ e^{-2j\alpha} \ .$$

Es handelt sich um die Definition der Fliehkräfte, in der Vektorenform, in zwei Fällen gleich und in einem Fall entgegengesetzt der Kurbellwellendrehrichtung rotierend und dieses mit genau der zweifachen Winkelgeschwindigkeit $2\omega$.

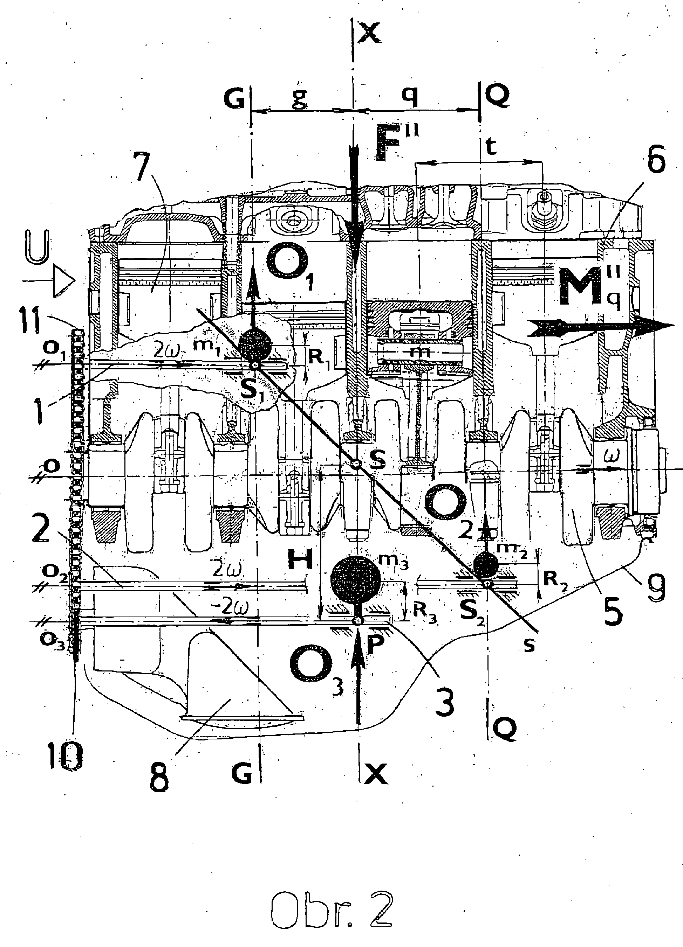

Im Unterschied zur oben verwiesenen bekannten Lösung ist jedoch das vorgelegte Ausgleichssystem technologisch fortgeschrittener, denn es arbeitet bereits nicht mehr auf der Basis der üblichen, begrenzenden zweidimensionalen Wirkungszusammensetzung rotierender Fliehkräfte $O_1$, $O_2$ und $O_3$ lediglich in einer einzigen Ausgleichsebene X-X, sondern es operiert mehr allgemein; und dieses dreidimensional mit axialer Diversifikation der Position der Rotationsmittelpunkte $S_1$, $S_2$ und P der Schwerpunkte dieser zentrierten Ausgleichsmassen $m_1R_1$, $m_2R_2$ und $m_3R_3$ an den zugehörigen Umdrehungsachsen $o_1$, $o_2$, und $o_3$ in drei verschiedenen Parallelebenen G-G, Q-Q und X-X mit gegenseitig verbundenen Entfernungen g und q, wie in der Fig. 2 aufgeführt. Wenn die Rotationsebene G-G der Bewegung des ersten Schwerpunkts zugeordnet ist, hier der oberen parallelen Ausgleichsmasse $m_1R_1$, die Rotationsebene Q-Q der Bewegung des zweiten Schwerpunkts zugeordnet ist, hier der unteren parallel rotierenden Ausgleichsmasse $m_2R_2$, dann sind deren relative Entfernungen g und q von der grundlegenden, zentralen Ausgleichsebene X-X, in dem obligatorisch der Schwerpunkt der gegenläufigen Ausgleichsmasse $m_3R_3$ rotiert, an die Bedingung des permanenten Momentgleichgewichts beider stetig parallel laufender Fliehkräfte $O_1$,$O_2$ der parallel laufenden Gegengewichte $m_1R_1$, $m_2R_2$ gegenüber dem Schnittpunkt S mit der erzeugenden Verbindungslinie der Rotationsmitten $S_1$, $S_2$ mit der grundlegenden, zentralen Ausgleichsebene X-X des Motors wie folgt verbunden

$$g.m_1R_1 + q.m_2R_2 = 0 \ .$$

Anschließend nach der Wahl der Entfernung q der Ebene Q-Q der Rotationskraft $O_1$ wird die Entfernung g der Ebene G-G der Rotationskraft $O_2$ von der zentralen Ausgleichsebene X-X durch die folgende Formel

$$g = - \ q.m_2R_2 \ / \ m_1R_1$$

und reziprok bestimmt.

Die Vorzeichen in den verwendeten Beziehungen zeigen an, dass die Position beider Rotationsebenen G-G und Q-Q der Schwerpunkte der parallelen Ausgleichsmassen $m_1R_1$ und $m_2R_2$ sich in den einander gegenüberliegenden Halbbereichen befinden, abgesteckt grade durch die grundlegende, zentrale Ausgleichsebene X-X der Längssymmetrie der Kolben und der Orientierung derer absoluten Entfernungen g, und q; also können die axialen Position der Schwerpunkte der parallelen Ausgleichsmassen $m_1R_1$ und $m_2R_2$ der Hilfsausgleichswellen 1 und 2 gegebenenfalls ohne Wirkungsänderung des Systems gegeneinander vertauscht werden.

Weiter werden die grundlegenden Bedingungen, gemeinsam parallel auch für das Multifunktionsausgleichssystem in der Ausführung laut CZ 297752 zur Geltung gebracht.

Also ist für den vollständigen Ausgleich der summierten freien, störenden Schubkraft der zweiten Harmonischen

$$F^{II} = 4.K_{II}.m.r.\omega^2\cos2\alpha$$

(bei einem Pleuelstangendurchmesser $\lambda$ = r/l = 0,3) die notwendige Bedingung die Wahl

$$m_1R_1 + m_2R_2 = m_3R_3 = m.r \ (\lambda + \lambda^3/4 + \dots) \ / \ 2 \ \approx 0,153525 \ m.r \ .$$

Für den idealen Fall der Anforderung eines vollständigen Ausgleichs des störenden, jedoch phasenverschobenen Quermoments

$$M''_q = 2.m.r.\omega^2\sin2\alpha$$

beim Reihenvierzylinder ist ebenfalls die Bedingung zur Erreichung der Überhöhung **H** des Tangentenschnittpunkts **S** über die Mitte **P** der Rotation des Schwerpunkts der gegenüberliegenden Ausgleichsmasse in Richtung der Zylinderachsen um die ideale Größe

$$H = \lambda.l / (\lambda + \lambda^3/4 +\ldots) \approx 0{,}97.l \;.$$

Dieses alles gilt zudem unter der Voraussetzung einer symmetrischen Einhaltung der identischen aber entgegengesetzt orientierten Entfernungen **u** der Mitte **P** der Schwerpunktrotation des gegensätzlich rotierenden Ausgleichsmasse $m_3R_3$ und des oben angeführten Tangentenschnittpunkts **S** von der Zylinderebene **V-V**, was gemeinsam die Bedingung der Erreichung derer gegenseitiger Distanzentfernung **D** mit der Größe

$$D = \overline{\sqrt{(H^2 + 4.u^2)}} \text{ erfüllt.}$$

Bei der Erfüllung dieser Grundsätze der Symmetrie, der richtigen Dimension der Ausgleichsmassen und bei der Respektierung der benötigten geometrischen Relationen zur Positionierung der Ausgleichswellen garantiert das hier vorgestellte Hilfssystem einen vollständigen dynamischen Ausgleich des Kolbenwerks des Reihenvierzylinders mit zentriertem Kurbelmechanismus bis zu geringen Rest Erregerschwingungen der vierten und höheren Ordnung. Eine solche effektive Wirkung wird hier jedoch neu bei einem erweiterten Angebot weiterer Konstruktions- und Einbauvarianten, anwendbar an der gegenständlichen Reihenvierzylinderkolbenmaschine, sichergestellt.
Bezüglich der mathematischen Symmetrie der oben angeführten Beziehungen und zu deren Gültigkeit auch im Fall der Erreichung der zugehörigen Größen mit einem umgekehrten Vorzeichen, ist die Funktionsparität der gespiegelten Konfigurationen der hier aufgezeigten Konstruktionsausführung vollständig garantiert, und dieses sowohl hinsichtlich der Anordnung der Ausgleichswellen **1**, **2**, und **3** gegenüber der Kolbenebene **V-V**, als auch hinsichtlich der axialen Lage der Ausgleichsmassenschwerpunkte $m_1R_1$ und $m_2R_2$ hinsichtlich der grundlegenden, zentralen Ausgleichsebene **X-X**. Dieses bedeutet, dass das hier aufgeführte Beispiel automatisch noch seine weiteren drei anverwandten, vom Einbau her gleich anwendbaren und von der Funktion her vollständig äquivalente, analoge Ausführungen repräsentiert. Dank dieser eigenen symmetrischen Eigenschaften funktioniert das vorgestellte Ausgleichssystem der Kolbenmaschine so auch vollständig identisch in beiden Drehrichtungen der Kurbelwelle **5**.

Die Vorteile der Lösung laut der Erfindung.

Der Beitrag der vorgelegten Lösung ist das erweiterte Angebot weiterer verwendbarer, unkonventioneller Konstruktionseinbauvarianten und die Schaffung eines effektiven dreiwelligen Multifunktionsausgleichssystems des Reihenvierzylindermotors, als typologischer Vertreter des allgemeinen Kolbenwerks, bei einer selbstverständlichen Beibehaltung sämtlicher bisheriger Funktionsvorteile laut der verwiesenen Schrift CZ 297752.
Aufgabe der Lösung ist die Verschiebung dieser Technik auf deren technologisch noch weiter fortgeschrittenes Niveau hinsichtlich einer bezüglich des Einbaus effektiveren Nutzbarkeit des Innenraums der auszugleichenden Kolbenmaschine und dadurch auch eine mögliche Minimierung von dessen umbauten Volumen.
Solche neuen Möglichkeiten der Lösung laut der Erfindung weisen auf bestimmte Auswahlmöglichkeiten für eine freie Rotationsbewegung der Gegengewichte mit den Massen $m_2$ und $m_3$ mit den Schwerpunkten und der seitlichen Einstellung um die Auslegung $R_2$ und $R_3$ gegenüber den Rotationsachsen $o_2$, und $o_3$ der Ausgleichswellen **2** und **3** benötigten Innenraums hin. Ein ähnlicher Einbau rotierender Auslegungsmassen der Ausgleichswellen ist im Unterschied zu einigen in der Praxis bekannten Ausführungen auch kompakter und wesentlich weniger beeinträchtigend hinsichtlich der sonst empfindlichen Nennhöhe des Fahrzeugs unter der Motorwanne.
Der Vorteil der vorgelegten Konstruktion des Ausgleichssystems ist parallel auch die Tatsache, dass es zur gegenseitigen Eliminierung der störenden und ausgleichenden Kräfte und derer abgeleiteter Wirkungen zwischen den Teilen des Motors überwiegend auf kurzem Weg, konkret im Bereich der Lagerung der Kurbelwelle **5** und nahegelegener Lager beider unterer Hilfsausgleichswelle **2** und **3,** kommt. Das hat einen weiteren Synergieeinfluss auf ein geringeres Gewicht und auf eine sparsamere Festigkeitsdimension der Teile sowie auf die mechanische Wirksamkeit der ganzen Hilfskonstruktion.

Wie bereits oben parallel abgeleitet, weist das vorgelegte Ausgleichssystem auch den Vorteil einer Reversibilität auf. Das bedeutet, dass es die eigene Funktion auch im Fall einer Änderung des Drehsinns des zentralen Kurbelwellenwerks **5** beibehält.

Übersicht der Figuren der Zeichnungen

Die Erfindung wird näher mit Hilfe zweier angefügter, gemeinsam korrespondierender Figuren, betreffend dasselbe Ausführungsbeispiel, erläutert.

Die Fig.1 stellt einen teilweisen Querschnitt durch den Kurbelmechanismus des ersten Zylinders eines Reihenmotors und die Frontansicht und die Sicht auf alle drei Ausgleichsebenen **G-G**, **X-X** und **Q-Q** des Systems in Richtung **"U"**, dargestellt in der Fig. 2, dar. In dieser gemischten Frontalprojektion des Ausgleichssystems in der Zeichnungsebene handelt es sich grundlegend um das Aufzeigen einer weiteren der möglichen Versionen des bereits bekannten dreiwelligen Multifunktionsausgleichsystems laut der verwiesenen Schrift CZ 297752. Aus diesem Grund zeigt Fig.1 parallel den letzten bekannten, technischen Ausgangszustand und den eigentlichen Gegenstand der Erfindung, es wird nur die geeignete entsprechende Querkonfiguration der Teile der betreffenden Kolbenmaschine ergänzt.

Die Fig. 2 dokumentiert im schematischen, länglichen korrespondierenden Teilschnitt durch die Kolbenmaschine mit Blickrichtung "W", laut der Fig. 1, das neue eigentliche Prinzip der Erfindung. Es handelt sich um eine unkonventionelle, aber vollständig kohärente und parallel allgemein gleich wirksam unsymmetrische längs entworfene Position der Rotationsmitten $S_1$, $S_2$ und $P$ der Schwerpunkte der Gegengewichte $m_1R_1$, $m_2R_2$ und $m_3R_3$ auf den Rotationsachsen $o_1$, $o_2$, $o_3$ des Ausgleichssystems. Diese beziehen sich laut der in den Anforderungen aufgeführten Definition auf die grundlegende zentrale Ausgleichsebene **X-X.** Parallel ist hier auch der Sonderfall einer vorteilhaften Wahl der relativen axialen Schwerpunktlage zentrierter Gegengewichte $m_2R_2$ und $m_3R_3$ im Kurbelgehäuse **9** dargestellt.

Ausführungsbeispiele der Erfindung

Ein Beispiel einer möglichen konkreten Konstruktionsausführung laut der Erfindung ist in den Figuren 1 und 2 gezeigt. Diese stellen eine Vierzylindermaschine in Reihenausführung der Zylinder **6** im Zylinderkurbelgehäuse **9**, dar, von denen jeder über einen vollständigen Kolben **7,** einer Pleuelstange der Länge **l** und einer ihm eigenen zentrierten Kurbelsektion mit achsenversetzten Hubzapfen **r**, ausgeführt zwischen den Wangen der zentralen Kurbelwelle **5** mit separaten Auswuchtgewichten der Rotationsmassen des Mechanismus, verfügt. Die symmetrische Kurbelwelle **5** hat am Leistungsausgangsende ein nicht eingezeichnetes, jedoch ausreichend dimensioniertes Schwungrad, welches die notwendige Laufgleichmäßigkeit der gesamten Maschine sicher stellt. Diesbezüglich kann im stabilisierten Betriebszustand auch die Winkelgeschwindigkeit ω der zentralen Kurbelwelle **5** als nahezu konstant angenommen werden. Parallel zu dieser sind im Zylinderkurbelgehäuse des Motors **9** auch drei Hilfsausgleichswellen **1**, **2 und 3** positioniert, welche sich exakt mit der zweifachen Winkelgeschwindigkeit **2**ω drehen. Und dieses so, dass eine von diesen, konkret die Ausgleichswelle **3** in gegensätzlicher Richtung gegenüber der restlichen Wellendrehrichtung, also **1,2 und auch 5**, rotiert. Diese kinematische Eigenschaft und gegenseitige exakte Ankoppelung stellen hier eine axiale, schlanke, einreihige Kettenübersetzung sicher, bestehend aus dem Kettenantriebsrad **4**, welches mit der zentralen Kurbelwelle fest verbunden ist, einer endlosen Rollen- oder Buchsenkette **11**, die Zusammenstellung von Kettenantriebsrädern **10** der Ausgleichswellen **1**, **2** und **3**, gegebenenfalls weitere Kettenräder, in den Hilfsantrieben integriert, beispielsweise der Ölpumpe **8.** Dieses Antriebssystem befindet sich an der Motorfront in gut geschmiertem Milieu unter dessen vorderem Deckel.

Mittels des beschriebenen, kompakten Mechanismus kann durch einen konstruktionsmäßig gangbaren Weg ein vollständiger Ausgleich beider dominanter freier Störkomponenten der zweiten harmonischen Ordnung durch eine ungleichmäßige periodische Bewegung der Schubmassen aller vier Kolbenwerksgruppen erzielt werden.

Als grundlegende Bedingungen für die Erzielung eines solchen Effekts stehen die korrekten Massendimensionen $m_1$, $m_2$, $m_3$ und die Auslegung $R_1$, $R_2$ und $R_3$ derer Schwerpunkte, als rotierende Ausgleichsmassen, der definierten Produkte $m_1R_1$, $m_2R_2$ und $m_3R_3$ gegenüber den eigenen Drehachsen $o_1$, $o_2$, $o_3$ im Sinne der oben angeführten Beziehungen, so auch deren geometrisch relevante Ursache der Lage auch der axialen Anordnung derer Schwerpunkte an den Hilfsausgleichswellen **1**, **2** und **3**, bestimmt mit gegenseitig orientierten und mit dem Vorteil auch verschieden großer Entfernungen **g** und **q** der Rotationsebenen **G-G** und **Q-Q**. Diese Anordnung der Ausgleichswellen **1**, **2** und **3** in Querrichtung, ersichtlich in der Fig. 1, muss parallel so ausgeführt werden, dass die räumliche Verbindungslinie **s** der Rotationsmitten $S_1$, $S_2$ der Schwerpunkte beider Ausgleichsmassen $m_1R_1$ und $m_2R_2$, als Schnittpunkt derer Drehachsen $o_1$, $o_2$ mit diesen gleichlaufenden Ebenen **G-G** und **Q-Q,** die grundlegende zentrale Ausgleichsebene **X-**

**X** des Aggregats im Punkt **S** schneidet, welcher sich über der Mitte **P** des Rotationsschwerpunkts der gegenläufigen Ausgleichsmasse $m_3R_3$ und dieses mit einer Entfernung $H \approx I$ in Richtung Zylinderachsen bei einem Distanzabstand **D** $= \sqrt{(H^2 + 4.u^2)}$ in der selben Ebene **X-X** befindet, wobei **u** deren vollständig zwanglose und konstruktionsmäßig wählbare Entfernung von der Zylinderebene **V-V**, laut der Fig. 1, kennzeichnet.

In der Fig. 2 ist das konkrete Ausführungsbeispielbeispiel laut der Erfindung mit den Gewicht einsparenden, relativ konzentrierten und erhoblich versetzten Gegengewichten dargestellt, es zeigt eine gerade geeignete Konstruktionsauswahl des freien Parameters **q**, also eine Sonderkonfiguration an, bei der dieser Versatz der Rotationsebenen **Q-Q** des Ausgleichsmassenschwerpunkts $m_2R_2$ von der grundlegenden, zentralen Ausgleichsebene **X-X**, gleich des ganzen, nullfreien, Vielfachen des Zylinderabstands **t** der Kolbenmaschine ist.

Die Konstruktion kann so für ähnliche Ausgleichsmassen $m_2R_2$ und $m_3R_3$, welche im unteren Motorenbereich unter der Kurbelwellenachse **5** rotieren, vorteilhaft den verfügbaren Platz unter den Deckeln derer Hauptlager nutzen.

Aufgrund der relativ schmalen Dimension der einzelnen Hilfswellen sind auch weitere Sonderkonstruktionsvarianten möglich, zum Beispiel mit vollständig oder auch teilweise verbundenen Ausgleichsmassen, die ebenfalls den beiliegenden Anforderungen und Bedingungen entsprechen.

Gewerbliche Anwendbarkeit

Das Ausgleichssystem der Kolbenmaschine ist vorrangig zur effektiven Befreiung bei mobilen Reihenvierzylindermotoren und Motoren mit hohem Hub mit größerem Hubraum in der Größenordnung zwei Liter und höher von den natürlichen Kraftwirkungen bereits bedeutender Restunausgeglichenheiten der Zylindergruppenschubmassen vor allem der dominanten harmonischen Schwingungen zweiter Ordnung, welche die Insassen belästigen, bestimmt. Und als ein solches Komfortkonstruktionselement ist der vorgelegte Entwurf von Anbeginn mit Priorität konzipiert und explizit zielgerichtet. Dessen weitere Anwendung und das objektive Potential im Bereich des Kraftfahrzeugbaus werden auch durch die neue vorbereitete Umweltschutzlegislatur vorgezeichnet, wie dieses in den Zusammenhängen oben ausgeführt wurde.

Trotzdem bestehen bisher nicht angemerkte Potentiale für dessen Einsatz auch in anderen interessanten, technologisch verwandten Anwendungen außerhalb dieses Fachgebiets.

Die Erste ist die mögliche Anwendung der effektiven Verwendung des Ausgleichssystems in Schiffsmotoren, welche relativ hart auf dem Basisträger des Schiffskiels gelagert sind, so dass die sich ergebenden Vibrationen, die durch deren natürliche Restunausgeglichenheit erzeugt werden sich sehr gut durch das gesamte Wasserfahrzeug verbreiten. Eine Abhilfe mit der Zusage einer markanten Verbesserung des Mannschaftskomforts bietet hier lediglich eine direkte, wirksame pränatale Liquidation der eigentlichen Vibrationsquelle, die gerade die Vorrichtung laut der Erfindung betrifft. Darunter wird außerdem als selbstverständlicher Effekt die reversible Fähigkeit der Systemausgleichsfunktion verstanden, durch welche sich gerade Schiffsmotoren, welche keine Getriebe aufweisen, aber eine Möglichkeit des rückwärtigen Schiffsfahrmanövers erfordern, unvermeidlich charakterisieren. Das einzige scheinbar offene Problem, nämlich auch die Sicherstellung der Reversibilität der Schmierpumpe, die potentiell in den Antriebskreislauf der Hilfswellen des Ausgleichsystems eingefügt wird, löst dann einfach deren entsprechende Anpassung laut der Patentschrift Nummer CZ AO 182087 gegebenenfalls dessen Analogie der DDR Patentschrift Nr.129983, oder GB Pat.No 1542618.

Weitere Anwendungsmöglichkeiten bietet gleichermaßen der Herstellungsbereich großer Reihenzylinderkompressoreinheiten, wo ähnliche Probleme anfallen.

Eine sehr wahrscheinliche und aussichtsreiche Nachfrage hinsichtlich der gegenständlichen Ausgleichstechnik kann in naher Zukunft auch bei betrieblich komfortabler, permanent laufender und bezüglich fossiler Quellen unabhängiger, alternativer Wärmeenergietechnik angenommen werden. In diesem Bereich bieten sich gerade die Reihenvierzylindermaschinen der aktuellen Hubraumumfänge direkt zur Nutzung als konkurrenzlose, effektivste, integrierte, stationäre, autonome Einheiten mit zwei Motorensektionen an, die zum Beispiel durch Biogas aus einer örtlichen Quelle angetrieben werden; ausgestattet mit zwei weiteren Kompressorzylindern, eingefügt in den Kreislauf der Wärmepumpe, gegebenenfalls noch in der Kombination mit einem Stromgenerator auf der gemeinsamen Kurbelwelle der Maschine. Es ist nämlich gut bekannt, dass ähnliche Anlagen, im Unterschied zum niedrigen, jedoch physikalisch vorgeschriebenen ein Drittel erreichenden thermodynamischen Wirkungsgrad des einfachen Carnotzyklus des konventionellen Verbrennungsmotors, bei einer seitens der Produktion technologischen und konstruktiven Verwandtheit beider Aggregate, bei einer Unterstützung des geometrischen Potentials der Umgebung, sogar über einen vielfachen wärmeenergetischen Gewinn im Vergleich zum Kalorienäquivalent des zugeführten Kraftstoffs verfügen; geschweige denn über den Aspekt einer grundlegenden Abgasreduzierung.

Verwendete Kennzeichnungen, Symbole und Definitionen mathematischer Beziehungen

| | |
|---|---|
| **1** | Obere, parallele Ausgleichswelle |
| **2** | Untere, parallele Ausgleichswelle |
| **3** | Gegenläufige oder auch gegenwirkende Welle |
| **4** | Kettenantriebsrad der zentralen Kurbelwelle |
| **5** | Zentrale, Maschinenkurbelwelle |
| **6** | Zylinderblock |
| **7** | Vollständiger Zylinder |
| **8** | Ölschmierpumpe |
| **9** | Motorblock |
| **10** | Mittels der Ausgleichswelle **1**, **2** oder **3** getriebenes Kettenrad |
| **11** | Rollen- oder Buchsenkette |
| **e** | Basis der natürlichen (Napier) Logarithmen (**e** = 2,718281828..) |
| **g** | Entfernung der Rotationsebene **G-G** der Ausgleichsmasse $m_1$, zentriert mit der Exzentrizität $R_1$ gegenüber der Rotationsachse $o_1$ der oberen parallelen Ausgleichswelle **1**, bestimmt durch die Beziehung |

$$g = - q.m_2 R_2 / m_1 R_1$$

| | |
|---|---|
| **j** | Imaginäre Einheit der komplexen Berechnung (**j** = $\sqrt{-1}$) |
| $o_1$ | Rotationsachse der oberen parallelen Ausgleichswelle **1** |
| $o_2$ | Rotationsachse der unteren parallelen Ausgleichswelle **2** |
| $o_3$ | Rotationsachse der gegenläufigen (gegenwirkenden) Ausgleichswelle **3** |
| **q** | Entfernung der Rotationsebene **Q-Q** der Ausgleichsmasse $m_2$, zentriert mit der Exzentrizität $R_2$ gegenüber der Rotationsachse $o_2$ der unteren parallelen Ausgleichswelle **2** |
| **l** | Pleuellänge |
| **r** | Kurbelradius der zentralen Kurbelwelle **5** |
| **u** | gegenüberliegende beliebig wählbare Entfernungen anderenorts definierter Schnittpunkte **S**, **P** des Ausgleichssystems von der Zylinderebene **V-V** in der mittigen Ausgleichsebene der Zylindermaschine **X-X** |
| **m** | Schubmasse der äquivalenten Teile der Zylindergruppen eines Zylinders |
| $m_1$ | Zentrierte Ausgleichsmasse der oberen parallelen Ausgleichswelle **1**, |
| $m_2$ | Zentrierte Ausgleichsmasse der unteren parallelen Ausgleichswelle **2**, |
| $m_3$ | zentrierte Ausgleichsmasse der gegenläufigen Ausgleichswelle **3**, |
| **s** | Räumliche Verbindungsgerade der Rotationsmitten $S_1$ und $S_2$ beider Gegengewichte $m_1$ und $m_2$ der parallelen Ausgleichswellen **1** und **2** mit der zentralen Ausgleichsebene **X-X** |
| **D** | Abstand zwischen den Punkten **S** und **P** in der grundlegenden Zentralausgleichsebene **X-X**, laut |

$$D = \overline{\sqrt{(H^2 + 4.u^2)}}$$

| | |
|---|---|
| $F^I$ | Erste harmonische Komponente der Zylindersektion eines Zylinders, definiert durch die Beziehung |

$$F^{\,I} = m.r.\omega^2.\cos\alpha$$

| | |
|---|---|
| $F^{II}$ | störende Schubkraft der restlichen Maschinenunausgeglichenheit, als auf den eigenen Träger gebundener Vektor mit oszillierender Größe, ausdrückend die gesamte momentan sich ergebende kraftharmonische Komponente der zweiten Ordnung, definiert durch die Beziehung |

$$F^{II} = 4.K_{II}.m.r.\omega^2.\cos 2\alpha.$$

| | |
|---|---|
| **G-G** | Spur der Rotationsebene der Ausgleichsmasse $m_1$, ausgelegt um den Wert $R_1$ gegenüber der Rotationsachse $o_1$ der oberen parallelen Ausgleichswelle **1**, in der Skizze der Fig.2 |

| | |
|---|---|
| $K_{II}$ | Grammelkoeffizient der Amplitudengröße der zweiten harmonischen Komponente der Schwungkraft der Schubmassen **m** eines Zylinders des Kurbelmechanismus, definiert durch die Summe der ungeraden mathematischen Endlosreihe als |

$$K_{II} = ( \lambda + \lambda^3/4 + 15.\lambda^5/128 + 35.\lambda^7/512. .) \approx 0,307$$

| | |
|---|---|
| $M_q{}^{II}$ | resultierende störende quergerichtete harmonische Momentkomponente der zweiten Ordnung als Nebensummenprodukt der anders ausgeglichenen ersten harmonischen Kräfte $F^I$, definiert als freier Vektor in Richtung der Rotationsachsen aller parallel laufender Wellen der Maschine mit der Größe, oszillierend laut der Beziehung |

$$M_q{}^{II} = 2.m.r^2.\omega^2.\sin 2\alpha$$

| | |
|---|---|
| H | Benötigte gemeinsame orientierte Höhenunterschiede anderweitig definierter Punkte **S, P** des Ausgleichsystems in Richtung des Schnittpunkts der Zylinderebene **V-V** und der zentralen Ausgleichsebene **X-X** um die ideale theoretische Größe |

$$H = \lambda.l / K_{II} = l / (1+\lambda^2/4+15.\lambda^4/128..) \approx 0,97.l$$

| | |
|---|---|
| $O_1$ | Fliehkraft der Ausgleichsmasse $m_1$ der Ausgleichswelle **1,** rotierend auf dem Hebel $R_1$ in der Ebene **G-G,** definiert durch die Beziehung |

$$O_1 = 4. m_1 R_1 \,\omega^2 \, e^{2j\alpha}$$

| | |
|---|---|
| $O_2$ | Fliehkraft der Ausgleichsmasse $m_2$ der Ausgleichswelle **2,** rotierend auf dem Hebel $R_2$ in der Ebene **Q-Q,** definiert durch die Beziehung |

$$O_2 = 4. m_2 R_2 \,\omega^2 \, e^{2j\alpha}$$

| | |
|---|---|
| $O_3$ | Fliehkraft der Ausgleichsmasse $m_3$ der Ausgleichswelle **3,** rotierend auf dem Hebel $R_3$ in der Ebene **X-X**, definiert durch die Beziehung |

$$O_3 = 4. m_3 R_3 \,\omega^2 \, e^{-2j\alpha}$$

| | |
|---|---|
| P | Schnittpunkt der Rotationsebene $o_3$ der gegenläufigen Ausgleichswelle **3** mit der Rotationsebene **X-X** der zugehörigen Ausgleichsmasse $m_3 R_3$ |
| Q-Q | Rotationsebenenspur der Ausgleichsmasse $m_2$, ausgelegt um den Wert $R_2$ gegenüber der Rotationsachse $o_2$ der unteren parallelen Ausgleichswelle **2**, in der Skizze der Fig.2 |
| $R_1$ | Auslegung des Ausgleichsmassenschwerpunkts $m_1$ gegenüber der Rotationsachse $o_1$ der Ausgleichswelle **1** in deren Rotationsebene **G-G** |
| $R_2$ | Auslegung des Ausgleichsmassenschwerpunkts $m_2$ gegenüber der Rotationsachse $o_2$ der Ausgleichswelle 2 in deren Rotationsebene **Q-Q** |
| $R_3$ | Auslegung des Ausgleichsmassenschwerpunkts $m_3$ gegenüber der Rotationsachse $o_3$ der Ausgleichswelle **3** |

in deren Rotationsebene **X-X**

**S** Schnittpunkt der räumlichen Verbindungsgeraden **s** der Rotationsmitten **S₁** und **S₂** der Schwerpunkte beider exzentrischer Gegengewichte **m₁.R₁, m₂.R₂** der parallelen Ausgleichswellen **1** und **2** mit der zentralen grundlegenden Ausgleichsebene **X-X**

**S₁** Schnittpunkt der Rotationsachse **o₁** der oberen parallelen Ausgleichswelle **1** mit der Rotationsebene **G-G** des Ausgleichsmassenschwerpunkts

**S₂** Schnittpunkt der Rotationsachse **o₂** der unteren parallelen Ausgleichswelle **2** mit der Rotationsebene **Q-Q** des Ausgleichsmassenschwerpunkts

**V-V** Spur der Zylinderebene der Reihenzylindermaschine in der Skizze der Fig. 1 als Schnittpunkt mit der Ebene **X-X** als Träger der resultierenden Störkraft **F$^{II}$**, dargestellt in der Fig. 1

**X-X** Spur der grundlegenden Zentralausgleichsebene des Aggregats und parallel die Rotationsebenen des Ausgleichsmasseschwerpunkts **m₃**, ausgelegt um den Wert **R₃** gegenüber der Rotationsachse **o₃** der gegenläufigen (gegenwirkenden) Ausgleichswelle **3** in der Skizze der Fig. 2 und parallel auch als Träger der Störkraft **F$^{II}$** als Schnittpunkt mit der Ebene **V-V**, dargestellt in der Fig.2

α Winkel der Kurbeldrehung des ersten Zylinders aus der Position seines oberen Kolbentotpunktes **7**

ω quasikonstante Winkelgeschwindigkeit der zentralen Kurbelwelle **5**

λ Kurbei- (Pieueistangen-) verhältnis, definiert als λ = **r / l** (ist meist λ ≈ 0,3)

+ Paralleler Drehsinn, übereinstimmend mit der Rotationsrichtung der zentralen Welle **5** der auszugleichenden Maschine

- Gegenläufiger Drehsinn, gegenläufig gegenüber der Drehrichtung der zentralen Welle **5** der auszugleichenden Maschine

## Patentansprüche

**1.** Ausgleichssystem einer Kolbenmaschine, bestimmt zur Liquidation sämtlicher dynamischer Restwirkungen der Schubmassen und Momente der harmonischen Schwingungen der zweiten Ordnung, gebildet durch drei zueinander parallellaufende und kinematisch fest verbundene Hilfsausgleichswellen, welche mit zweifacher Winkelgeschwindigkeit hinsichtlich der Drehzahl mit der mit ihnen parallel laufenden zentralen Kurbelwelle rotieren, wobei nur eine von diesen gegenläufig ist,

**dadurch gekennzeichnet, dass** die Schwerpunkte der allgemeinen verschiedenen Ausgleichsmassen (**m₁**) und (**m₂**), versetzt um die Auslegungen (**R₁**) und (**R₂**) gegenüber den Rotationsachsen (**o₁**), (**o₂**) der parallelen Hilfsausgleichswellen (**1**), (**2**) in der identischen Phasenposition in zwei verschiedenen Parallelebenen (**G-G**) und (**Q-Q**), definiert durch entgegengesetzt orientierte nullfreie Abstände (**g**) und (**q**) von der Dritten, rotieren, wobei gleichermaßen mit diesen parallel und zwischen diesen die grundlegende zentrale Ausgleichsebene (**X-X**) der Maschine liegt, in der sich gegenläufig und mit Auslegung (**R₃**) gegenüber der eigenen Rotationsachse (**o₃**) die Schwerpunkte der Ausgleichsmassen (**m₃**) der gegen wirkenden Ausgleichswelle (**3**) so drehen, dass die Relation

$$g = - q.m_2 R_2 / m_1 R_1 \text{ erfüllt ist,}$$

wobei die räumliche Verbindungsgerade (**s**) der Rotationsmitten (**S₁**) und (**S₂**) der Schwerpunkte beider paralleler Ausgleichsmassen (**m₁R₁**) und (**m₂R₂**) die grundlegende Zentralausgleichsebene (**X-X**) der Maschine im Punkt (**S**) schneidet, welcher einen Höhenunterschied in Richtung der Zylinderachsen über der Mitte (**P**) der Rotationsschwerpunkte (**m₃R₃**) mit dem Maß (**H** ≈ **l**) hat, unter Einhaltung von deren gegenseitigem Abstand (**D**), bestimmt durch die Beziehung

$$D = \sqrt{(H^2 + 4.u^2)}$$

wobei der Parameter (**u**) den kostruktionsmäßig beliebig wählbaren Abstand darstellt und (**l**) die Länge der Pleuelstange kennzeichnet.

**2.** Ausgleichsystem der Kolbenmaschine gemäß Anspruch 1,

*dadurch gekennzeichnet, dass* der Konstruktionsabstand (**q**) der parallellaufenden Rotationsebenen (**Q-Q**) und (**X-X**) der Ausgleichsmassenschwerpunkte ($m_2R_2$) und ($m_3R_3$) der Hilfsausgleichswellen (**2**) und (**3**) als ein ganzes nullfreies Vielfaches der Größe des Zylinderabstands (**t**) der auszugleichenden Kolbenmaschine gewählt ist.

Obr. 1

Obr. 2

**EP 2 006 573 A2**

**In der Beschreibung aufgeführte Patentdokumente**

- CZ 297752
- CZ AO182087
- DD 129983
- GB 1542618 A